# FASCICULE DE BREVET EUROPEEN

(11) **EP 2 061 114 B1**
(45) Date de publication et mention de la délivrance du brevet: **16.02.2011**
(21) Numéro de dépôt: 08354081.5
(22) Date de dépôt: 29.10.2008
(51) Int. Cl.: H01M 8/10, H01M 8/24, H01M 8/02, H01M 8/00

(54) **Pile à combustible comportant une pluralité de cellules élémentaires connectées en série par les collecteurs de courant**
Brennstoffzelle, bestehend aus mehreren Elementarzellen, die durch Serienschaltung mit den Stromkollektoren miteinander verbunden sind
Fuel cell comprising a plurality of elementary cells connected in series by the current collectors

(30) Priorité: 13.11.2007 FR 0707974
(43) Date de publication de la demande: 20.05.2009
(73) Titulaire: Commissariat à l'Énergie Atomique et aux Énergies Alternatives, 75015 Paris (FR)
(72) Inventeur: Faucheux, Vincent, 38250 Lans en Vercors (FR); Gaillard, Frédéric, 38500 Voiron (FR); Lambert, Karine, 38134 Saint Julien de Ratz (FR); Laurent, Jean-Yves, 38420 Domène (FR)
(74) Mandataire: Hecké, Gérard

(56) Documents cités:
- WO-A-2006/069031
- WO-A-2007/020242
- JP-A- 10 335 592
- JP-A- 61 121 265
- US-A- 5 861 221
- US-A1- 2001 051 293
- T. FREY, K.A. FRIEDRICH, L. JÖRISSEN, J. GARCHE: "Preparation of Direct Methanol Fuel Cells by Defined Multilayer Structures" JOURNAL OF THE ELECTROCHEMICAL SOCIETY, vol. 152, no. 3, 26 janvier 2005 (2005-01-26), pages A545-A551, XP002471760

## Description

### Domaine technique de l'invention

L'invention concerne une pile à combustible comportant un support poreux sur lequel est disposée une pluralité de cellules élémentaires, adjacentes et comprenant chacune :
- un assemblage, formé d'une première . électrode, d'une membrane électrolytique et d'une seconde électrode
- et des premier et second collecteurs de courant,
lesdites cellules élémentaires étant connectées en série par des éléments de connexion respectivement disposés entre deux cellules adjacentes pour connecter le premier collecteur de courant d'une cellule au second collecteur de courant de la cellule adjacente.

L'invention concerne également un procédé de fabrication d'une pile à combustible.

### État de la technique

La tension délivrée par une pile à combustible unitaire, c'est-à-dire une pile à combustible ne comportant qu'une cellule élémentaire constituée par un assemblage Electrode-Membrane-Electrode (ou assemblage EME) avec des collecteurs de courant associés, n'est, en général, pas suffisante pour une utilisation dans le domaine des dispositifs portables. En effet, certaines applications susceptibles d'utiliser des piles à combustible comme source d'énergie nécessitent des tensions élevées, par exemple, supérieures à quelques volts. Pour cela, il est nécessaire d'utiliser une pile à combustible comportant une pluralité de cellules élémentaires connectées en série, l'anode d'une cellule élémentaire étant reliée à la cathode de la cellule adjacente.

De manière courante, les cellules élémentaires sont réalisées séparément avant d'être associées en série les unes aux autres. Dans le cas des piles à combustible réalisées sous forme de couches minces sur un support plan (piles également appelées piles planaires), les assemblages EME sont, en général, réalisés séparément sur des supports plans, découpés un par un, puis associés en série les uns aux autres. Un tel procédé de fabrication est long et il nécessite l'ajout de collecteurs de courant, soudés ou collés, sur les anodes et cathodes des assemblages pour permettre la mise en série des cellules.

Dans l'article « microfabricated fuel cells » (Electrochimica Acta 48 (2003) 2869-2877), J.S. Wainright et al. proposent une pile à combustible comportant une pluralité de cellules connectées en série, formées sur un film poreux en nylon disposé sur de l'alumine percée de canaux. Les collecteurs de courant anodiques sont formés par dépôt par impression d'une encre. De plus, des joints isolants en polymère non poreux sont placés entre les collecteurs de courant anodique, et le reste des piles est, ensuite, réalisé. La mise en série des piles est réalisée par impression d'une encre conductrice. Cependant, avec cette solution, les membranes électrolytiques se gonflent et se décollent du substrat en atmosphère humide (100% RH). Or, ce décollement provoque des fuites et l'arrêt de la pile. La faible tenue mécanique des membranes est liée d'une part à un mauvais contact entre les joints isolants et les collecteurs anodiques, provoquant ainsi des espaces, et d'autre part à une mauvaise adhérence des membranes électrolytiques sur les joints isolants.

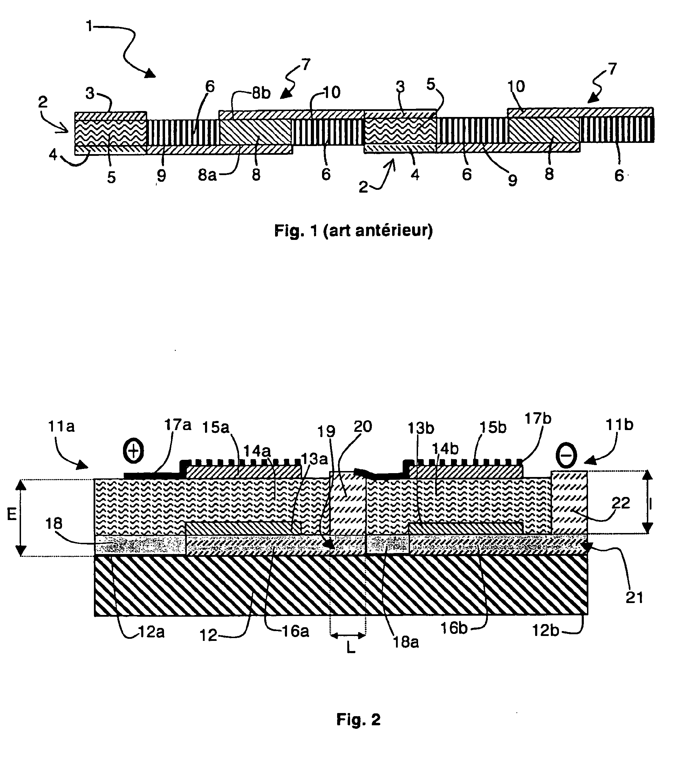

Le brevet US5863672 décrit une géométrie de pile à combustible différente permettant d'augmenter artificiellement la tension élémentaire. Comme illustré sur la figure 1, une telle pile 1 est constituée de plusieurs cellules élémentaires 2 disposées les unes à côtés des autres. Chaque cellule 2 comporte un assemblage d'une anode 3 et d'une cathode 4 disposées entre une membrane électrolytique 5. Les cellules 2 sont séparées les unes des autres par des zones isolantes électriquement 6 et elles sont connectées entre elles par des pièces de connexion 7 conductrices électriquement. Les pièces de connexion 7 comportent chacune une zone centrale 8 comportant des première et seconde faces 8a et 8b respectivement recouvertes par des première et, seconde couches 9 et 10 comportant chacun une extrémité en contact respectivement avec l'anode 4 d'une première pile et la cathode 6 de la pile adjacente à ladite première pile. Une telle pile et, en particulier, les pièces de connexion 7 sont difficiles à mettre en oeuvre, notamment à petite échelle. Elle nécessite, également, une étape d'assemblage de l'ensemble formé par les cellules mises en série entre plusieurs autres éléments, tels que des collecteurs de courant externes et des plaques distributrices de gaz disposés de part et d'autre dudit ensemble. Enfin, des problèmes d'étanchéité subsistent.

La demande de brevet US 2006/0228605 propose une autre solution. Dans cette demande de brevet, une membrane électrolytique est formée en imprégnant un support poreux d'un matériau conducteur ionique. Le support poreux est un tissu dont les fibres de chaîne sont des fibres continues en matériau isolant électriquement et les fibres de trame sont alternativement des fibres en matériau isolant et des fibres en matériau conducteur électriquement, formant ainsi respectivement des zones isolantes et des zones conductrices. Un joint est déposé à la périphérie du tissu et les anodes et les cathodes sont déposées de part et d'autre de la membrane ainsi constituée. Un collecteur de courant est également mis en contact avec l'anode disposée à une des deux extrémités de la pile et un autre collecteur de courant est mis en contact avec la cathode disposée à l'autre extrémité de la pile. Les zones électriquement actives du support poreux délimitent et assurent, ainsi, la connexion en série d'une pluralité de cellules élémentaires.

Cette solution permet d'éviter les fuites de combustible puisque le support poreux est pleinement imprégné de matériau conducteur ionique. Cependant, la membrane, ainsi formée doit présenter une épaisseur minimale pour assurer la tenue mécanique de l'ensemble. Cette épaisseur est de l'ordre de 20 micromètres. Or, pour augmenter les densités de puissance, les membranes doivent présenter une épaisseur la plus faible possible, de préférence entre 1 à 10 micromètres, Par ailleurs, les fibres utilisées pour former le support poreux occupent un certain volume qui gêne la diffusion des protons à travers l'électrolyte. En effet, la surface d'une zone conductrice électriquement, généralement supérieure à 2 mm, constitue une surface non négligeable qui est inutilisable pour la diffusion des protons. Enfin, les fibres isolantes et les fibres conductrices sont respectivement continûment isolantes et continûment conductrices, de sorte que la mise en série des cellules ne peut se faire que sur une seule ligne.

Le document JP61121265 propose d'augmenter la tension de sortie d'une pile à combustible sans augmenter son poids, en connectant, sur un même niveau, des cellules élémentaires en série. Chaque cellule élémentaire est formée par un empilement formé d'une première couche mince de diffusion, perméable aux gaz et disposée du côté combustible, d'une couche catalytique, d'une matrice à base d'électrolyte, d'une couche catalytique et d'une seconde couche mince de diffusion, perméable aux gaz et disposée du côté oxydant. Par ailleurs, la première couche mince de diffusion d'une cellule élémentaire est reliée à la seconde couche mince de diffusion d'une cellule élémentaire adjacente par l'intermédiaire d'un élément de connexion, formé par le même matériau que celui constituant les première et seconde couches minces de diffusion, mais comportant, en plus, des particules inorganiques (par exemple des particules de phosphate de zirconium), destinées à rendre cet élément étanche aux gaz. De plus, les premières (ou secondes) couches minces de diffusion de deux cellules élémentaires adjacentes sont séparées l'une de l'autre par une partie de la matrice à base d'électrolyte.

La demande de brevet WO-A-2007/020242 décrit un coeur de pile comprenant au moins une membrane polymère composite formée par une alternance de premiers et seconds segments étanches aux gaz, respectivement conducteurs ioniques et conducteurs électroniques, une succession d'anodes et une succession de cathodes respectivement disposées sur des première et seconde faces opposées de la membrane. Les segments étanches aux gaz, conducteurs électroniques relient l'anode d'une cellule à la cathode d'une cellule adjacente. Ils peuvent, de plus, être réalisés en introduisant localement des particules conductrices électroniquement dans une matrice poreuse, puis en réalisant un traitement permettant de ramollir le polymère constituant la matrice et donc de boucher les pores de cette matrice, rendant, ainsi, lesdits segments étanches aux gaz. La matrice poreuse peut être un polymère dénué de toute propriété de conduction ionique (par exemple un polytétrafluoroéthylène du type Teflon) ou bien un polymère conducteur ionique intrinsèque.

L'ensemble des solutions actuelles pour la mise en série de cellules élémentaires, sans avoir recours au découpage et au collage desdites cellules, se heurte à des problèmes de tenue mécanique :
- soit au niveau de la membrane électrolytique qui se décolle,
- soit au niveau des assemblages EME et plus particulièrement de la membrane qui doit posséder une épaisseur minimale trop élevée pour être compatible avec des fortes densités de puissance.

De plus, pour une surface de pile donnée, celle-ci est partagée entre la surface occupée par l'ensemble des cellules élémentaires (« surface active ») et la surface occupée par les zones isolantes et/ou les zones conductrices (« surface inactive »). Or, dans les solutions proposées ci-dessus, la part de « surface active » est relativement faible et cette part est d'autant plus faible que le nombre de cellules est important, ce qui s'avère être incompatible pour des applications visant l'alimentation de dispositifs portables.

### Objet de l'invention

L'invention a pour but une pile à combustible et un procédé de fabrication d'une pile à combustible remédiant aux inconvénients de l'art antérieur.

Plus particulièrement, l'invention a pour but une pile à combustible pouvant atteindre des tensions élevées et notamment des tensions compatibles avec des applications visant l'alimentation de dispositifs portables, tout en étant facile à réaliser et présentant une bonne tenue mécanique et une bonne étanchéité.

L'invention a également pour but de proposer un procédé de fabrication facile à mettre en oeuvre pour obtenir une pile à combustible pouvant atteindre des tensions élevées et notamment des tensions compatibles avec des applications visant l'alimentation de dispositifs portables, tout en étant facile à réaliser et présentant une bonne tenue mécanique et une bonne étanchéité.

Selon l'invention, ce but est atteint par les revendications annexées.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente une pile à combustible selon l'art antérieur.
- la figure 2 représente, schématiquement et en coupe, un mode particulier de réalisation d'une pile à combustible selon l'invention.
- les figures 3 à 5 représentent, schématiquement et en coupe, différentes étapes d'un premier procédé de fabrication de la pile à combustible selon la figure 2.
- les figures 6 à 9 représentent, schématiquement et en coupe, différentes étapes d'un second procédé de fabrication de la pile à combustible selon la figure 2.

### Description de modes particuliers de réalisation

Une pile à combustible selon l'invention comporte une pluralité de cellules élémentaires adjacentes connectées en série par des éléments de connexion. La pile est, avantageusement, une pile à combustible planaire.

Dans un mode particulier de réalisation illustré à la figure 2, deux cellules élémentaires sont disposées côte à côte sur un support poreux 12 présentant des faces supérieure et inférieure 12a et 12b, de préférence planes.

Le support poreux 12 est, par exemple, constitué par un matériau poreux. Il peut, également, être formé par un matériau non poreux, percé de canaux. La porosité du matériau poreux ou la taille des canaux percés dans le matériau non poreux est, par ailleurs, suffisante pour permettre la diffusion des fluides circulant dans la pile à combustible et notamment du fluide combustible. Le support poreux 12 est, de plus, isolant électriquement et il a avantageusement une épaisseur comprise entre 0,1mm et 2mm. Il est, par exemple, constitué par un matériau choisi parmi les céramiques, les polymères, le silicium et le carbure de silicium.

Les deux cellules sont respectivement notées 11a et 11b sur la figure 2, la cellule 11a étant la cellule disposée à gauche sur la figure 2 (également appelée première cellule) et la cellule 11b étant disposée à droite sur la figure 2 (également appelée seconde cellule). Par ailleurs, d'une manière générale, dans la suite de la description, les références suivies de la lettre « a » s'appliquent aux éléments constitutifs de la cellule 11a représentée sur la figure 2, tandis que les références suivies de la lettre « b » s'appliquent aux éléments constitutifs de la cellule 11b.

Pour des raisons de clarté, lorsque la description s'applique indifféremment aux deux cellules 11a et 11 b ainsi qu'à leurs éléments constitutifs, les indices « a » et « b » seront omis. Ainsi, à titre d'exemple, les cellules 11a et 11b et toute cellule additionnelle, seront référencées 11.

Chaque cellule élémentaire 11 comporte :
- un assemblage formé d'une première électrode 13, par exemple une anode, d'une membrane électrolytique 14 avantageusement solide et d'une seconde électrode 15, par exemple une cathode
- et des premier et second collecteurs de courant 16 et 17, respectivement associés aux première et seconde électrodes 13 et 15.

Plus particulièrement, pour chaque cellule élémentaire 11, le premier collecteur de courant 16 de ladite cellule 11 recouvre une partie de la face supérieure 12a du support poreux 12. Le premier collecteur 16 est entouré de zones isolantes électriquement 18 ayant, de préférence, une épaisseur égale à celle des premiers collecteurs de courant 16. La première électrode 13 recouvre une partie du premier collecteur de courant 16 qui lui est associé et la membrane électrolytique 14 est disposée sur l'ensemble. Ainsi, la membrane électrolytique 14 recouvre, dans sa partie inférieure :
- la première électrode 13,
- la partie du premier collecteur de courant 16 non recouverte par la première électrode 13
- et les zones isolantes 18 entourant le premier collecteur de courant 16. De plus, la seconde électrode 15 et le second collecteur de courant 17 sont disposés sur la partie supérieure de la membrane électrolytique 14 de chaque cellule 11. Ainsi, sur la figure 2, la seconde électrode 15 est disposée sur la membrane électrolytique, tandis que le second collecteur de courant 17 est disposé en partie sur la membrane électrolytique 14 et en partie sur la seconde électrode 15. De plus, la seconde électrode 15 est disposée en regard de la première électrode 14 et elle est séparée de la première électrode 14 par la membrane électrolytique 14.

Par ailleurs, les deux cellules élémentaires adjacentes 11a et 11b sont connectées en série par l'intermédiaire d'un élément de connexion en matériau conducteur électriquement. L'élément de connexion est disposé entre les deux cellules adjacentes 11a et 11b. Il assure, par l'intermédiaire des collecteurs de courant, la connexion de la première cellule 11a à la seconde cellule 11b, qui est adjacente à la première cellule 11a.

L'élément de connexion fait partie, avec le premier collecteur de courant 16, d'un élément de liaison 19, en forme de L inversé par rapport à un axe perpendiculaire au support 12 (axe vertical sur la figure 2).

L'élément de liaison 19 est constitué, en effet, de deux parties comportant chacune un matériau commun, conducteur électriquement.

La première partie est un film mince de base, disposé sur la face supérieure 12a du support poreux 12 et constituant le premier collecteur de courant 16a de la première cellule 11a. Le film mince de base est un film poreux, permettant la diffusion du combustible à travers le premier collecteur de courant 16a et incorporant un matériau conducteur électriquement

La seconde partie est une branche 20, prolongeant perpendiculairement le premier collecteur de courant 16a et constituant l'élément de connexion. La branche 20 est constituée par le même matériau que le matériau conducteur électriquement incorporé dans le film mince de base. De plus, si le matériau de la branche 20 est un matériau poreux et si la membrane électrolytique 14 est formée par séchage d'un matériau conducteur ionique déposé sous forme liquide, le matériau conducteur ionique peut pénétrer à l'intérieur des pores de la branche 20, de manière à former une membrane électrolytique continue d'une cellule 11a à une autre cellule adjacente 11b, ce qui favorise la tenue mécanique de la membrane 14.

La branche 20 de l'élément de liaison 19 a, de préférence, une longueur l supérieure ou égale à l'épaisseur E des empilements respectivement formés par le premier collecteur de courant 16a ou 16b, la première électrode 13a ou 13b et la membrane électrolytique 14a ou 14b, des première et seconde cellules 11a et 11 b. La longueur l de la branche 20 est, par exemple, comprise entre 1µm et 60µm, tandis que la largeur L de la branche 20 peut être comprise entre 1 µm et 2mm. Sur la figure 2, une partie de la branche 20 émerge des deux assemblages et peut être reliée au second collecteur de courant 17b de la seconde cellule 11 b. De plus, le second collecteur de courant 17b est directement en contact avec la branche 20 de l'élément de liaison 19. La branche 20 pourrait, cependant, être reliée au second collecteur de courant 17b par d'autres moyens, tels qu'un fil conducteur. Par ailleurs, la branche 20 est en contact avec la membrane électrolytique 14a et 14b des deux assemblages des cellules adjacentes 11a et 11b, sur toute l'épaisseur de ladite membrane. Ainsi, la branche 20 ne se retrouve pas en contact avec l'une des électrodes des deux assemblages. De plus, elle n'est pas en contact avec le second collecteur de courant 17a de la première cellule 11a. Les deux premiers collecteurs de courant 16a et 16b des deux cellules adjacentes 11a et 11b sont, de plus, séparés par une des zones isolantes 18 (zone notée 18a sur la figure 2).

Ainsi, l'élément de liaison 19 assure, grâce au film mince de base 16a, la fonction de collecteur de courant pour la première cellule 11a et il permet, grâce à la branche 20, la mise en série de ladite cellule 11a avec sa voisine, la seconde cellule 11b sur la figure 2.

Sur la figure 2, la pile à combustible comporte également un élément de liaison supplémentaire 21, ayant une structure identique à celle de l'élément de liaison 19. Le film de base dudit élément de liaison 21 est constitué par le premier collecteur de courant 16b de la seconde cellule 11b, lequel est prolongé perpendiculairement par une branche (ou élément de connexion) 22, dont la longueur 1 est supérieure ou égale à l'épaisseur E.

La branche 22 de l'élément de liaison supplémentaire 21 peut être utilisée pour connecter le premier collecteur de courant 16b de la seconde cellule 11 b avec le second collecteur de courant d'une cellule supplémentaire adjacente (non représentée sur la figure 2).

La branche 22 peut également, comme illustré sur la figure 2, être connectée à une des deux bornes de la pile à combustible, si la seconde cellule 11 b se trouve être une cellule élémentaire d'extrémité, c'est-à-dire l'une des cellules disposées à une extrémité de la chaîne de cellules élémentaires formant la pile. Si les premiers collecteurs de courant 16a et 16b sont, avantageusement, des collecteurs de courant anodiques, la branche 22 est, comme représentée sur la figure 2, connectée à la borne négative de la pile. Dans ce cas, l'élément de liaison supplémentaire 21 est appelé élément de liaison d'extrémité.

De la même manière, le second collecteur 17a de la première cellule 11a peut être connecté au premier collecteur de courant d'une autre cellule adjacente (non représentée sur la figure 2), par l'intermédiaire d'un autre élément de liaison. Le second collecteur 17a peut aussi, comme illustré sur la figure 2, être connecté à l'autre borne de la pile (borne positive sur la figure 2), si la première cellule 11a est une des cellules élémentaires d'extrémité.

Le matériau conducteur électriquement constituant les éléments de connexion (ou branches) 20 et 22 et incorporé dans les premiers collecteurs de courant 16a, 16b est, par exemple, choisi parmi un métal, du carbone et un matériau tel qu'une encre conductrice comportant des particules métalliques ou des nanotubes de carbone, et leur mélange.

Les premiers collecteurs de courant constitués par les films minces de base poreux 16a, 16b sont constitués par une matrice poreuse, isolante électriquement, telle qu'une céramique, un polymère, du silicium ou du carbure de silicium, et dans laquelle est incorporé le matériau conducteur électriquement. Ils peuvent, ainsi, être réalisés par imprégnation d'une pâte (par exemple par sérigraphie) ou d'une encre (par exemple par impression par jet d'encre, par un système de délivrance micrométrique ou « micro-dispensing », par pulvérisation) contenant des particules métalliques telles que l'or, l'acier inoxydable, le cuivre, l'aluminium ou des particules de carbone ou leur mélange. Ils peuvent également être réalisés par dépôt physique en phase vapeur (PVD) ou dépôt chimique en phase vapeur (CVD) ou toutes autres techniques dérivées. De plus, les premiers collecteurs de courant étant poreux, cette porosité peut être obtenue directement par formation des films minces de base ou après une étape de séchage ou de brûlage de polymère, de carbone..., par exemple par échauffement local, par exemple application d'un faisceau laser ou d'un rayonnement infrarouge ou par traitement thermique dans un four ou par combustion locale.

Les zones isolantes 18, disposées sur le support poreux 12 et entourant les premiers collecteurs de courant 16a et 16b, sont constituées du matériau poreux isolant électriquement entrant également dans la composition des premiers collecteurs de courant 16a et 16b. L'épaisseur des zones isolantes 18 est, avantageusement, comprise entre 0,1 µm et 40µm. Par ailleurs, elles peuvent être réalisées par des techniques utilisées dans le domaine de la céramique (sérigraphie, coulage en bande...), de la plasturgie ou de la microélectronique.

Une telle pile à combustible est, avantageusement, fabriquée en réalisant les éléments de liaison 19, 21 séparés entre eux par les zones 18a avant de réaliser les assemblages des cellules élémentaires 11a, 11b et les seconds collecteurs de courant 17a, 17b de la pile. Les éléments de liaison 19, 21 sont en particulier réalisés :
- en formant, sur le support poreux (12), les premiers collecteurs de courant séparés par les zones 18, 18a
- et en formant les branches 20, 22 prolongeant perpendiculairement lesdits films minces, lesdites branches étant formées à partir du même matériau conducteur électriquement.

Ainsi, les zones isolantes 18 et les collecteurs de courant 16a et 16b peuvent avantageusement être réalisés à partir du dépôt d'une même couche mince. Ceci permet d'obtenir des collecteurs de courant 16 et des zones isolantes 18 de même épaisseur, sans espace libre entre eux, évitant, ainsi, les problèmes de fuites de combustible.

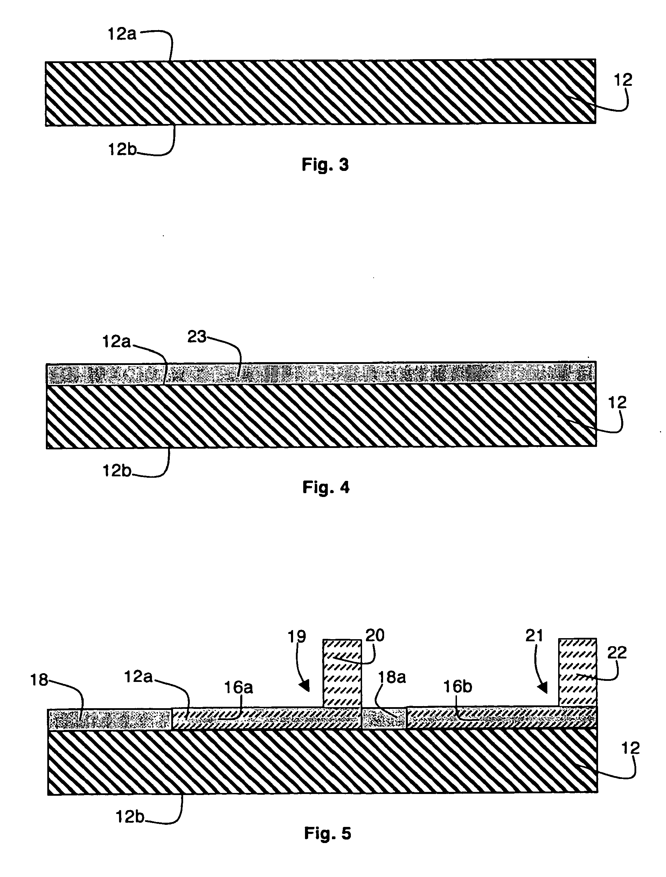

Les figures 3 à 5 illustrent, par exemple, les premières étapes d'un mode particulier de réalisation d'une telle pile à combustible. Une couche mince 23, en matériau poreux isolant électriquement, est déposée sur la totalité de la face supérieure 12a du support poreux 12 (figure 4). Puis, un matériau conducteur électriquement est introduit ou incorporé sélectivement dans des parties prédéterminées de la couche mince 23, afin de former, comme représenté sur la figure 5, les premiers collecteurs de courant 16a et 16b. Comme représenté sur la figure 5, les branches 20 et 22 peuvent avantageusement être formées en même temps que les premiers collecteurs de courant 16a et 16b dans la mesure où elles sont constituées par le même matériau que celui incorporé dans les parties prédéterminées de la couche mince 23. Les branches 20 et 22 peuvent aussi être formées après la formation des premiers collecteurs de courant 16a et 16b, par exemple en déposant localement le même matériau que celui incorporé dans les parties de la couche mince 23 destinées à former les premiers collecteurs de courant 16a et 16b. Les branches 20 et 22 peuvent, par exemple, être réalisées par sérigraphie, par jet d'encre. Ensuite, les assemblages des cellules 11a et 11b et les seconds collecteurs de courant 17a et 17b sont formés.

Le procédé de fabrication est, ainsi, facilité et plus rapide à mettre en oeuvre, puisque la connexion en série entre toutes les cellules élémentaires d'une pile peut être réalisée en une seule opération.

À titre d'exemple, la couche mince 23 est réalisée en déposant une couche mince en céramique isolante poreuse, par sérigraphie, sur toute la face supérieure 12a du support poreux 12. Une encre conductrice est, ensuite, introduite sélectivement, par imprégnation, dans les parties de la couche mince 23 destinées à former les collecteurs de courant 16a et 16b. Une étape de séchage permet, alors, l'obtention des collecteurs de courant 16a et 16b et des zones isolantes 18. L'imprégnation de la couche mince 23 par une encre conductrice peut se faire sur toute son épaisseur ou bien seulement dans une partie supérieure de la couche mince 23 ou bien au-delà de la couche mince 23, de manière à imprégner également le support poreux 12. Les branches 20 et 22 sont, ensuite, réalisées, à partir de cette même encre déposée par exemple par sérigraphie.

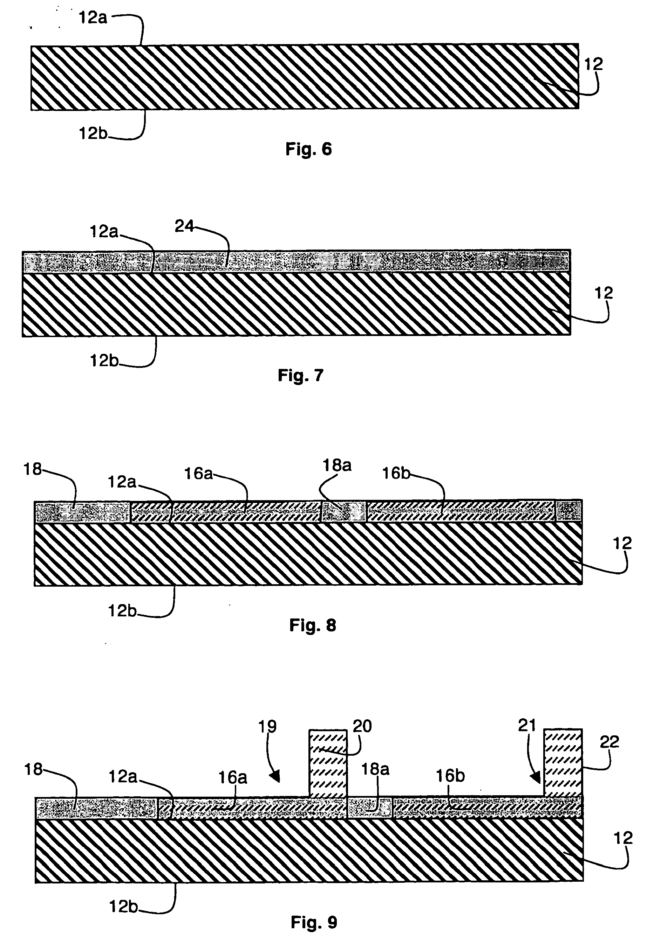

Dans une variante de réalisation représentée sur les figures 6 à 9, la couche mince 23 en matériau isolant électriquement peut être remplacée par une couche mince 24 constituée par une matrice poreuse isolante électriquement, dans laquelle est incorporé un matériau conducteur électriquement. Dans ce cas, l'étape de dépôt de la couche 24 est suivie d'une étape d'élimination sélective du matériau conducteur électriquement, dans des parties prédéterminées de la couche 24 correspondant aux zones isolantes 18 souhaitées. Si le matériau conducteur électriquement est à base de carbone, il peut être sélectivement éliminé par chauffage localisé, par exemple par application d'un faisceau laser, d'un faisceau infrarouge ou par combustion, permettant de brûler localement le matériau conducteur électriquement à base de carbone. Les branches 20 et 22 sont, en particulier, formées après la formation des premiers collecteurs de courant 16a et 16b (figure 5). La formation des éléments de liaison 19 et 21 séparés par une des zones isolantes 18 est, ensuite, suivie de la formation des assemblages des cellules et des seconds collecteurs de courant.

Une pile à combustible selon l'invention présente, ainsi, l'avantage d'être facile et rapide à mettre en oeuvre, tout en permettant d'atteindre des hautes densités de puissance et de conserver une bonne tenue mécanique, une bonne étanchéité et une grande « surface active ».

En effet, la mise en série des cellules élémentaires avec des éléments de liaison tels que ceux représentés sur la figure 2 permet de diminuer les pertes ohmiques liées aux résistances de contact, dans le cas d'applications nécessitant des densités de courant élevées (> 300mA/cm²). Dans le cas d'une mise en série des cellules élémentaires, par découpe des cellules et collage des collecteurs de courant, des mesures de résistances de contact entre le collecteur anodique d'une cellule et le collecteur cathodique de la cellule voisine indiquent des valeurs de 0.1 Ohm. Par conséquent, les pertes par effet joule s'élèvent à environ 0.1W à 300mA et 1W à 1A dans le cas d'une association de 10 cellules. Or, l'utilisation des éléments de connexion 20 et 22 entre les collecteurs de courant anodique 16 et cathodique 17 respectivement des cellules adjacentes permet de diminuer considérablement les pertes par effet joule, car le courant est distribué sur une plus grande surface.

De plus, l'utilisation d'un support poreux assurant la tenue mécanique permet de réaliser des membranes électrolytiques de très faibles épaisseurs, ce qui permet d'obtenir des densités de puissance élevées, tout comme la diminution des pertes par effet joule.

Par ailleurs, l'utilisation avantageuse d'un matériau commun aux zones isolantes et aux éléments de liaison permet d'assurer une continuité entre ces deux éléments (même hauteur, pas de décalage ou de chevauchement), ce qui réduit les risques de fuites.

Enfin, la faible largeur des branches (ou éléments de connexion), associé au fait que le support ne nécessite pas de renforts supplémentaires autour des cellules, permet d'augmenter la part de « surface active » accordée aux cellules. Cela permet d'optimiser la surface de la pile à combustible afin d'obtenir des piles délivrant une tension élevée en mettant en série un très grand nombre de cellules élémentaires tout en minimisant la taille de la pile.

## Revendications

1. Pile à combustible comportant un support poreux (12) sur lequel est disposée une pluralité de cellules élémentaires (11, 11a, 11b), adjacentes et comprenant chacune :
- un assemblage, formé d'une première électrode (13, 13a, 13b), d'une membrane électrolytique (14, 14a, 14b) et d'une seconde électrode (15, 15a, 15b)
- et des premier et second collecteurs de courant (16, 16a, 16b et 17, 17a, 17b),
lesdites cellules élémentaires (11, 11a, 11b) étant connectées en série par des éléments de connexion respectivement disposés entre deux cellules adjacentes (11a, 11b) pour connecter le premier collecteur de courant (16a) d'une cellule (11a) au second collecteur de courant (17b) de la cellule adjacente (11b),
pile **caractérisée en ce que** :
- le premier collecteur de courant (16a) est constitué d'un film mince de base constitué d'une matrice poreuse isolante électriquement incorporant un matériau conducteur électriquement et il est disposé sur le support poreux (12),
- chaque élément de connexion est formé par une branche (20) constituée par ledit matériau conducteur électriquement, prolongeant perpendiculairement le film mince de base et reliée au second collecteur de courant (17b) de ladite cellule adjacente (11b), ladite branche (20) étant en contact avec la membrane électrolytique (14, 14a, 14b) desdits assemblages, sur toute l'épaisseur de ladite membrane
- et une zone (18a), constituée par un matériau poreux isolant électriquement et disposée sur le support poreux (12), sépare les deux films minces de base de deux cellules adjacentes (11a, 11b), le matériau poreux isolant électriquement de la zone (18a) étant identique à celui constituant la matrice poreuse desdits films minces de base.

2. Pile à combustible selon la revendication 1, **caractérisée en ce que** la pile comporte deux bornes respectivement connectées aux premier et second collecteurs de courant (16b et 17a) respectifs des cellules élémentaires disposées aux extrémités de la pile.

3. Pile à combustible selon l'une des revendications 1 et 2, **caractérisée en ce que** la matrice poreuse isolante électriquement est choisie parmi les céramiques, les polymères, le silicium et le carbure de silicium.

4. Pile à combustible selon l'une quelconque des revendications 1 à 3, **caractérisée en ce que** le matériau conducteur électriquement est choisi parmi un métal, du carbone et un matériau comportant des particules métalliques ou des nanotubes de carbone, et leur mélange.

5. Pile à combustible selon l'une quelconque des revendications 1 à 4, **caractérisée en ce que** les deux films minces de base et ladite zone (18a) en matériau poreux isolant électriquement ont la même épaisseur.

6. Procédé de fabrication d'une pile à combustible selon l'une quelconque des revendications 1 à 5, **caractérisé en ce que** la formation des assemblages des cellules élémentaires (11a, 11b) et des seconds collecteurs de courant (17a, 17b) de la pile est précédée d'une étape de formation d'éléments de liaison (19, 21) séparés entre eux par la zone (18, 18a), ladite étape consistant :
- à former, sur le support poreux (12), les premiers collecteurs de courant séparés par la zone (18, 18a)
- et à former les branches (20, 22) prolongeant perpendiculairement lesdits films minces, lesdites branches (20, 22) étant formées à partir du même matériau conducteur électriquement.

7. Procédé de fabrication d'une pile à combustible selon la revendication 6, **caractérisé en ce que** les branches (20, 22) sont formées en même temps que les premiers collecteurs de courant (16a, 16b).

8. Procédé de fabrication d'une pile à combustible selon la revendication 6, **caractérisé en ce que** les branches (20, 22) sont formées après les premiers collecteurs de courant (16a, 16b).

9. Procédé selon l'une quelconque des revendications 6 à 8, **caractérisé en ce que** la formation des premiers collecteurs de courant (16a, 16b) consiste à:
- à déposer, sur le support poreux (12), une couche mince en matériau poreux isolant électriquement (23)
- et à incorporer sélectivement le matériau conducteur électriquement dans des parties prédéterminées de ladite couche mince (23), lesdits parties constituant les premiers collecteurs de courant (16a, 16b).

10. Procédé selon l'une des revendications 6 et 7, **caractérisé en ce que** la formation des premiers collecteurs de courant (16a, 16b) consiste à :
- à déposer, sur le support poreux (12), une couche mince (24) en matériau poreux isolant électriquement incorporant ledit matériau conducteur électriquement,
- et à éliminer sélectivement ledit matériau conducteur électriquement dans des parties prédéterminées de ladite couche mince (24), lesdites parties constituant les zones (18, 18a) séparant les premiers collecteurs de courant (16a, 16b).

11. Procédé selon la revendication 10, **caractérisé en ce que** le matériau conducteur électriquement étant à base de carbone, l'élimination sélective dudit matériau est réalisée par échauffement local desdites parties prédéterminées.

## Claims

1. Fuel cell comprising a porous support (12) whereon a plurality of adjacent individual cells (11, 11a, 11b) are arranged, each individual cell comprising:
- an assembly formed by a first electrode (13, 13a, 13b), an electrolytic membrane (14, 14a, 14b) and a second electrode (15, 15a, 15b),
- and first and second current collectors (16, 16a, 16b and 17, 17a, 17b), said individual cells (11, 11a, 11b) being connected in series by connecting elements respectively arranged between two adjacent cells (11a, 11b) to connect the first current collector (16a) of one cell (11a) to the second current collector (17b) of the adjacent cell (11b),
**characterized in that**:
- the first current collector (16a) consists of a base thin film made of an electrically insulating porous matrix incorporating an electrically conducting material and is arranged on the porous support (12),
- each connecting element is formed by a branch (20) formed by said electrically conducting material, perpendicularly extending the base thin film and connected to the second current collector (17b) of said adjacent cell (11b), said branch (20) being in contact with the electrolytic membrane (14, 14a, 14b) of said assemblies over the whole thickness of said membrane,
- and an area (18a) being consisted of an electrically insulating porous material, arranged on the porous support (12), separates the two base thin films of two adjacent cells (11a, 11b), the electrically insulating porous material of the area (18a) being identical to that constituting the porous matrix of said base thin films.

2. Fuel cell according to claim 1, **characterized in that** the cell comprises two terminals respectively connected to the respective first and second current collectors (16b and 17a) of the individual cells arranged at the end of the fuel cell.

3. Fuel cell according to one of claims 1 and 2, **characterized in that** the electrically insulating porous matrix is chosen from ceramics, polymers, silicon and silicon carbide.

4. Fuel cell according to any one of claims 1 to 3, **characterized in that** the electrically conducting material is chosen from a metal, carbon and a material comprising metallic particles or carbon nanotubes, and a mixture thereof.

5. Fuel cell according to any one of claims 1 to 4, **characterized in that** the two base thin films and said area (18a) made from electrically insulating porous material have the same thickness.

6. Method for producing a fuel cell according to any one of claims 1 to 5, **characterized in that** formation of the assemblies of individual cells (11a, 11b) and of the second current collectors (17a, 17b) of the cell is preceded by a step of formation of connecting elements (19, 21) separated from one another by the area (18, 18a), said step consisting in:
- in forming of the first current collectors separated by the area (18, 18a), on the porous support (12),
- and in forming of the branches (20, 22) perpendicularly extending said thin films, said branches (20, 22) being formed from the same electrically conducting material.

7. Method for producing a fuel cell according to claim 6, **characterized in that** the branches (20, 22) are formed at the same time as the first current collectors (16a, 16b).

8. Method for producing a fuel cell according to claim 6, **characterized in that** the branches (20, 22) are formed after the first current collectors (16a, 16b).

9. Method according to any one of claims 6 to 8, **characterized in that** formation of the first current collectors (16a, 16b) consists:
- in depositing a thin layer of electrically insulating porous material (23) on the porous support (12),
- and in selectively incorporating the electrically conducting material in predefined parts of said thin layer (23), said parts constituting the first current collectors (16a, 16b).

10. Method according to one of claims 6 and 7, **characterized in that** formation of the first current collectors (16a, 16b) consists:
- in depositing a thin layer (24) of electrically insulating porous material incorporating said electrically conducting material on the porous support (12),
- and in selectively eliminating said electrically conducting material in predefined parts of said thin layer (24), said parts forming the areas (18, 18a) separating the first current collectors (16a, 16b).

11. Method according to claim 10, **characterized in that** the electrically conducting material being carbon-based, selective elimination of said material is achieved by local heating of said predefined parts.

## Patentansprüche

1. Brennstoffzelle mit einem porösen Träger (12), auf dem eine Vielzahl von Elementarzellen (11, 11a, 11b) angeordnet ist, die angrenzend sind und jeweils aufweisen:
- eine Anordnung, die aus einer ersten Elektrode (13, 13a, 13b), einer zweiten Membran (14, 14a, 14b) und einer zweiten Elektrode (15, 15a, 15b) gebildet ist,
- sowie erste und zweite Stromkollektoren (16, 16a, 16b und 17, 17a, 17b), wobei die Elementarzellen (11, 11a, 11b) durch zwischen zwei angrenzenden Zellen (11a, 11b) angeordnete Anschlusselemente in Reihe geschaltet sind, um den ersten Stromkollektor (16a) einer Zelle (11a) an den zweiten Stromkollektor (17b) der angrenzenden Zelle (11 b) anzuschließen,
**dadurch gekennzeichnet, dass**:
- der erste Stromkollektor (16a) aus einem dünnen Basisfilm besteht, der aus einer elektrisch isolierenden porösen Matrix besteht, die ein elektrisch leitendes Material einschließt, und der auf dem porösen Träger (12) angeordnet ist,
- jedes Anschlusselement durch einen Zweig (20) gebildet ist, der aus dem elektrisch leitenden Material besteht, senkrecht den dünnen Basisfilm verlängert und mit dem zweiten Stromkollektor (17b) der angrenzenden Zelle (11 b) verbunden ist, wobei der Zweig (20) über die gesamte Dicke der Membran in Kontakt mit der elektrolytischen Membran (14, 14a, 14b) der Anordnungen ist,
- und eine zweite Zone (18a), die durch ein poröses, elektrisch isolierendes Material gebildet und auf dem porösen Träger (12) angeordnet ist, die zwei dünnen Basisfilme von zwei angrenzenden Zellen (11a, 11b) trennt, wobei das elektrisch isolierende, poröse Material der Zone (18a) identisch mit demjenigen ist, aus dem die poröse Matrix der dünnen Basisfilme besteht.

2. Brennstoffzelle nach Anspruch 1, **dadurch gekennzeichnet, dass** das Element zwei Anschlüsse aufweist, die jeweils an den ersten bzw. an den zweiten Stromkollektor der an den Enden der Zelle angeordneten Elementarzellen der Zelle angeschlossen sind.

3. Brennstoffzelle nach einem der Ansprüche 1 und 2, **dadurch gekennzeichnet, dass** die elektrisch isolierende, poröse Matrix aus Keramik, Polymeren, Silicium und Siliciumcarbid gewählt ist.

4. Brennstoffzelle nach einem der Ansprüche 1 bis 3, **dadurch gekennzeichnet, dass** das elektrisch leitende Material aus einem Metall, Kohlenstoff und einem Material, das metallische Partikel oder Kohlenstoffnanoröhren aufweist, und ihre Mischung gewählt ist.

5. Brennstoffzelle nach einem der Ansprüche 1 bis 4, **dadurch gekennzeichnet, dass** die zwei dünnen Basisfilme und die Zone (18a) aus elektrisch isolierendem, porösen Material die gleiche Dicke haben.

6. Verfahren zur Herstellung einer Brennstoffzelle nach einem der Ansprüche 1 bis 5, **dadurch gekennzeichnet, dass** der Bildung der Anordnungen der Elementarzellen (11a, 11b) und der zweiten Stromkollektoren (17a, 17b) der Zelle ein Schritt der Ausbildung von Verbindungselementen (19, 21) vorhergeht, die voneinander durch die Zone (18, 18a) getrennt sind, wobei der Schritt besteht aus:
- Ausbildung der durch die Zone (18, 18a) getrennten ersten und zweiten Stromkollektoren auf dem porösen Träger (12),
- und Ausbildung der die dünnen Filme senkrecht verlängernden Zweig, wobei die Zweige (20, 22) aus dem gleichen elektrisch leitenden Material gebildet werden.

7. Verfahren zur Herstellung einer Brennstoffzelle nach Anspruch 6, **dadurch gekennzeichnet, dass** die Zweige (20, 22) gleichzeitig mit den ersten Stromkollektoren (16a, 16b) gebildet werden.

8. Verfahren zu Herstellung einer Brennstoffzelle nach Anspruch 6, **dadurch gekennzeichnet, dass** die Zweige (20, 22) nach den ersten Stromkollektoren (16a, 16b) gebildet werden.

9. Verfahren nach einem der Ansprüche 6 bis 8, **dadurch gekennzeichnet, dass** die Ausbildung der ersten Stromkollektoren (16a, 16b) besteht aus:
- Aufbringen einer dünnen Schicht aus elektrisch isolierendem, porösen Material (23) auf den porösen Träger (23)
- und selektives Einschließen des elektrisch leitenden Materials in vorbestimmte Teile der dünnen Schicht (23), wobei diese Teile die ersten Stromkollektoren (16a, 16b) bilden.

10. Verfahren nach einem der Ansprüche 6 und 7, **dadurch gekennzeichnet, dass** die Ausbildung der ersten Stromkollektoren (16a, 16b) besteht aus:
- Aufbringen einer dünnen Schicht (24) aus elektrisch isolierendem, porösen Material, welches das elektrisch leitende Material einschließt, auf dem porösen Träger (12)
- und selektives Beseitigen des elektrisch leitenden Materials in vorbestimmten Teilen der dünnen Schicht (24), wobei diese Teile, die die Zonen (18, 18a) bilden, die ersten Stromkollektoren (16a, 16b) trennen.

11. Verfahren nach Anspruch 10, **dadurch gekennzeichnet, dass**, wenn das elektrisch leitende Material auf Kohlenstoffbasis ist, die selektive Beseitigung durch lokale Erwärmung der vorbestimmten Teile durchgeführt wird.
